# EUROPÄISCHE PATENTSCHRIFT

(11) **EP 1 648 583 B1**
(45) Veröffentlichungstag und Bekanntmachung des Hinweises auf die Patenterteilung: **24.01.2007**
(21) Anmeldenummer: 04741107.9
(22) Anmeldetag: 16.07.2004
(51) Int. Cl.: B01D 29/96, B01D 35/147

(54) **ÖLFILTERANORDNUNG UND FILTERELEMENT**
OIL FILTER ARRANGEMENT AND FILTER ELEMENT
ENSEMBLE FILTRE A HUILE ET ELEMENT FILTRANT

(30) Priorität: 16.07.2003 DE 10333398
(43) Veröffentlichungstag der Anmeldung: 26.04.2006
(73) Patentinhaber: Joma-Polytec Kunststofftechnik GmbH, 72411 Bodelshausen (DE)
(72) Erfinder: MAUTE, Alexander, 72379 Hechingen-Stetten (DE); JUNGMANN, Peter, 72379 Rangendingen (DE)
(74) Vertreter: Bulling, Alexander
(86) Internationale Anmeldenummer: PCT/EP2004/007987
(87) Internationale Veröffentlichungsnummer: WO 2005/007267

(56) Entgegenhaltungen:
- EP-A- 0 692 292
- WO-A-00/09238
- DE-A- 4 243 217
- DE-A- 10 156 888
- US-A- 3 543 935

## Beschreibung

Die Erfindung betrifft eine Ölfilteranordnung mit einem Gehäuse, das einen Aufnahmeraum für ein in das Gehäuse einsetzbares, radial mit Öl durchströmbares Filterelement aufweist, und mit einem den Aufnahmeraum verschließenden Gehäusedeckel, wobei zur Umgehung des Filterelements ein Überströmventil vorgesehen ist. Die Erfindung betrifft außerdem ein Filterelement für eine derartige Ölfilteranordnung.

Aus dem Stand der Technik ist, beispielsweise aus der DE 39 03 675 C2, eine solche Ölfilteranordnung bekannt. Diese weist ein Überströmventil auf, das dann betätigt wird, das heißt einen Durchfluss von ungefiltertem Rohöl erlaubt, wenn das Filterelement dem zu filternden Öl einen zu hohen Widerstand entgegensetzt. Somit kann ein der Ölfilteranordnung nachgeschalteter Verbrennungsmotor auch dann mit (allerdings ungefiltertem) Öl versorgt werden, wenn das Filterelement verstopft oder zugesetzt ist.

Obwohl die in der DE 39 03 675 C2 gezeigte Ölfilteranordnung grundsätzlich dazu geeignet ist, die gewünschte Sicherheitsfunktion zu erfüllen, besteht das Problem, dass das Überströmventil für Inspektions- und/oder Wartungszwecke nur schlecht zugänglich ist. Dies ist besonders problematisch, weil das Überströmventil im normalen Betrieb der Ölfilteranordnung nur sehr selten, das heißt beispielsweise bei einem verspäteten Austausch des Filterelements, aktiviert wird. In diesen, in der Praxis eher seltenen Fällen, muss dann allerdings das fehlerfreie Ansprechen, das heißt Öffnen des Überströmventils, gewährleistet sein.

Aus der DE 40 14 519 C2 ist ein Flüssigkeitsfilter mit Überstromventil bekannt geworden, der aus einem mit einem Gehäusedeckel verschließbaren topfförmigen Filtergehäuse, einem austauschbaren Filterelement und einem zwischen Roh- und Reinraum an dem Gehäusedeckel angeordneten Überstromventil sowie einer an dem Filterelement befestigten, dichtend an dem Überstromventil anliegenden, Dichtung besteht. Dabei ist das Überstromventil direkt mit dem Gehäusedeckel fest verbunden, wobei die an dem Überstromventil anliegende, filterelementseitige Dichtung eine Radialdichtung ist. Bei diesem Stand der Technik hat sich die Dichtwirkung der Radialdichtung als problematisch herausgestellt. Ferner ist das Einführen des Ventils, beziehungsweise des Ventilgehäuses in die filterelementseitige Radialdichtung problematisch.

Aus der De 42 43 217 A1 ist ein Flüssigkeitsfilter mit einem Basis- und einem Deckelteil bekannt geworden, bei dem ein deckeseitiger Stutzen vorgesehen ist, an dem ein Bypassventil angeordnet ist. Der Stutzen ist dabei in den Innenraum eines zylinderrohrförmigen Filterkörper einführbar.

Der vorliegenden Erfindung liegt die Aufgabe zugrunde, eine Ölfilteranordnung bereitzustellen, die einen einfachen Aufbau aufweist, bei der eine sichere Abdichtung zwischen Reinölseite und Rohölseite stattfindet und die betriebssicher auf einfache Art und Weise montierbar ist, wobei außerdem die Zugänglichkeit des Überstromventils verbessert sein soll.

Diese Aufgabe wird erfindungsgemäß mit einer Ölfilteranordnung mit den Merkmalen des Anspruchs 1 und mit einem Filterelement mit den Merkmalen des Anspruchs 10 gelöst.

Vorteilhafterweise ist das Überströmventil bei der erfindungsgemäßen Ölfilteranordnung direkt zugänglich, nachdem der Gehäusedeckel vom Gehäuse abgeschraubt ist. Somit ist das Überströmventil jederzeit problemlos auf eine fehlerfreie Funktion hin überprüfbar, wodurch gewährleistet ist, dass die (selten gebrauchte) Sicherheitsfunktion im Bedarfsfall auch tatsächlich vorhanden ist.

Das Überströmventil ist folglich durch Abschrauben des Gehäusedeckels zugänglich, wobei das Überströmventil am Gehäusedeckel verbleibt. Dies hat den Vorteil, dass das Überströmventil an einem fahrzeugfernen Ort auf fehlerfreie Funktion hin überprüft werden kann. Beispielsweise kann der Gehäusedeckel zusammen mit dem Überströmventil zu einer Prüfstation gebracht werden, so dass in dieser Station die Funktion des Überströmventils überprüft werden kann. Ein Herausnehmen oder Austauschen des Filterelements ist dabei nicht erforderlich.

In vorteilhafter Weise ist das Überströmventil freistehend an der Innenseite des Gehäusedeckels angeordnet. Hierdurch ist gewährleistet, dass das Überströmventil, zumindest dessen wesentliche Bauteile wie Ventilkörper, Ventilkörperaufnahme, Ventilsitz und Ventilfeder, für eine Sicht- und/oder Funktionskontrolle gut zugänglich sind.

Dadurch, dass ein radial äußerer Bereich des Überströmventils in eine Öffnung an einer Endseite des Filterelements zur Bildung einer Radialdichtung eingreift wird eine Trennung der Reinölseite von der Rohölseite erreicht.

Aufgrund der konusartigen Verjüngung des radial äußeren Bereichs und der entsprechend ausgebildeten der Öffnung an der Endseite des Filterelements wird einer großflächiger Dichtkontakt hergestellt. Zwischen dem radial äußeren Bereich des Überströmventils und der Öffnung in einer Endseite kann dabei ein Dichtungselement, beispielsweise in Form eines entsprechenden Dichtungsringes, vorgesehen sein. Der Dichtungsring ist allerdings nicht zwingend erforderlich; der radial äußere Bereich des Überströmventils kann auch direkt an der Öffnung der Endseite anliegen.

Eine konusartige Verjüngung hat ferner den Vorteil, dass ein Einführen des radial äußeren Bereichs des Umströmventils in die filterelementseitige Öffnung ohne Verkanten auf günstige Weise erfolgen kann. Ferner ist vorteilhaft, dass eine wirksame Abdichtung zwischen dem Überströmventil und dem Filterelement erfolgen kann, auch wenn zwischen Gehäusedeckel und Gehäuse in Längsrichtung Einbautoleranzen vorhanden sein sollten. Durch die sich verjüngende, konusartige Form der genannten Art der Radialdichtung kann, unabhängig von den genannten Toleranzen eine wirksame Abdichtung erfolgen, da die Dichtwirkung keilförmig zwischen dem Überströmventil und der Endseite des Filterelements erfolgt.

Das Überströmventil kann einen beweglichen Ventilkörper, eine den Ventilkörper führende Ventilkörperaufnahme, einen mit dem Ventilkörper zusammenwirkenden Ventilsitz und eine den Ventilkörper auf den Ventilsitz drückende Ventilfeder aufweisen. Die Ventilkörperaufnahme kann ihrerseits einen umlaufenden Ringabschnitt zur Einfassung des Ventilsitzes, einen Führungsdorn zur Führung des Ventilkörpers und einen zwischen dem Führungsdorn und dem Ringabschnitt angeordneten, durchströmbaren Käfigabschnitt umfassen. Dieser prinzipielle Aufbau eines Überströmventils gewährleistet eine weitestgehend zuverlässige Funktion und eine gute Herstellbarkeit. Es kann jedoch vorkommen, dass der Ventilkörper nicht aus seinem Ventilsitz gehoben werden kann, beispielsweise weil die Ventilfeder mit Schmutzpartikeln behaftet ist, so dass die Ventilfeder nicht zusammengedrückt werden kann. Um einer solchen Funktionsstörung vorzubeugen, ist es vorteilhaft, dass durch Abschrauben des Gehäusedeckels sowohl der Ventilkörper als auch die Ventilkörperaufnahme, der Ventilsitz und die Ventilfeder zugänglich sind. Hierdurch ist gewährleistet, dass eine einfache Überprüfung auf fehlerfreie Funktion des Überströmventils gewährleistet ist. Beispielsweise kann mit einem Werkzeug der Ventilkörper entgegen der Wirkung der Ventilfeder aus seinem Ventilsitz gedrückt werden. Ist dies möglich und nimmt dabei der Widerstand, bedingt durch die zunehmende Kompression der Ventilfeder, spürbar zu, besteht eine hohe Wahrscheinlichkeit, dass das Überströmventil fehlerfrei funktioniert. Ist hingegen das Abheben des Ventilkörpers aus dem Ventilsitz nicht möglich, muss geprüft werden, ob beispielsweise Schmutzpartikel zwischen den Federwindungen der Ventilfeder ein Zusammendrücken der Ventilfeder verhindern. In einem solchen Fall kann entweder das Überströmventil durch ein neues Überströmventil ersetzt werden oder das vorhandene Überströmventil, beispielsweise mit Druckluft, gereinigt werden.

Besonders vorteilhaft ist es, wenn der Ventilsitz im Gehäusedeckel integriert ist. Hierdurch kann die erforderliche Anzahl der Bauteile minimiert werden und ferner Bauraumhöhe eingespart werden.

Der Ventilsitz kann durch einen ringförmigen Kragen gebildet sein, der unlösbar mit dem Gehäusedeckel verbunden ist. Hierdurch ist es möglich, dass der ringförmige Kragen mit seiner vergleichsweise genau zu fertigenden Ventilsitzfläche zunächst separat vom Gehäusedeckel herstellbar ist und dann mit diesem gefügt werden kann. Durch die unlösbare Verbindung wird verhindert, dass der Kragen und damit der Ventilsitz sich während des Betriebs der Ölfilteranordnung vom Gehäusedeckel lösen können. Diese Gefahr ist nicht zu unterschätzen, da die Ölfilteranordnung während ihres Betriebs in einem Fahrzeug starken Vibrationen ausgesetzt ist.

Die Verbindung zwischen dem ringförmigen Kragen und dem Gehäusedeckel erfolgt vorteilhafterweise durch Kleben, Verrasten und/oder Schweißen. Diese Herstellungsverfahren lassen sich in der Großserie problemlos darstellen. Beispielsweise kann der ringförmige Kragen mit Hilfe des Reibschweißverfahrens, insbesondere mit Hilfe des Rotationsreibschweißverfahrens, mit dem Gehäusedeckel verbunden werden.

Das radial mit Öl durchströmbare Filterelement kann von innen nach außen oder von außen nach innen durchströmt sein. Eine Durchströmung von innen nach außen hat den Vorteil, dass bei Entfernen des Filterelements aus dem Aufnahmeraum ungefiltertes Rohöl im Inneren des Filterelements wieder der Rohölseite der Ölfilteranordnung zufließen kann, so dass dieses ungefilterte Rohöl nicht auf die Reinölseite der Ölfilteranordnung gelangt. Eine Durchströmung von außen nach innen hat den Vorteil, dass die rohölseitig zur Verfügung stehende Filterfläche gegenüber einer Durchströmung von innen nach außen vergrößert ist.

Vorteilhafterweise ist das Überströmventil im Bereich der Längsachse des Filterelements angeordnet. Hierdurch kann das Überströmventil in radialer Richtung und gleichmäßig entlang des Umfangs des Ventilsitzes angeströmt werden. Dies hat den Vorteil, dass der Ventilkörper weitestgehend querkraftfrei in der Ventilkörperaufnahme bewegt werden kann, so dass ein Abheben des Ventilkörpers aus dem Ventilsitz bei zugesetztem Filterelement gewährleistet ist. Außerdem ist vorteilhaft, dass die Durchströmung des Filterelements entlang seiner gesamten Länge und besonders gleichmäßig erfolgen kann. Dies gilt insbesondere dann, wenn das Überströmventil nur abschnittsweise oder nicht in das Innere des Filterelements hineinragt.

In vorteilhafter Weise ist das Filterelement vom Gehäusedeckel beaufschlagt, um das Filterelement im Aufnahmeraum des Gehäuses zu haltern. Diese Beaufschlagung kann in einem radial äußeren Bereich des Filterelements und/oder an der Endseite des Filterelements durch beispielsweise am Gehäusedeckel angeordnete, sich in Richtung des Filterelements erstreckende, Stege erfolgen. Durch diese Maßnahmen ist eine zuverlässige Fixierung des Filterelements in seinem zum Gehäusedeckel benachbarten Bereich gewährleistet. Die Beaufschlagung kann auch vom Gehäusedeckel über das Überströmventil auf das Filterelement erfolgen; das Überströmventil des Gehäusedeckels drückt dann das Filterelement, insbesondere über den sich verjüngenden äußeren Bereich des Überströmventils, in die Gehäuseaufnahme.

In diesem Zusammenhang kann es vorteilhaft sein, wenn ein sich am Gehäuse abstützendes Federelement das Filterelement in Richtung Gehäusedeckel beaufschlagt. Hierdurch wird zum einen gewährleistet, dass der radial äußere Abschnitt des Überstromventils unter einer Vorspannung gegen die entsprechend konusartig ausgebildete Öffnung drückt. Zum anderen wird gewährleistet, dass das Filterelement sicher unter Vorspannung im Aufnahmeraum gehalten wird, wodurch, insbesondere bei Erschütterungen der Ölfilteranordnung, keine Klappergeräusche auftreten können. Durch ein derartiges Federelement kann zudem erreicht werden, dass beim Aufschrauben des Gehäusedeckels das Filterelement aus seiner Betriebslage in eine Entnahmelage ausgelenkt wird, in der das Filterelement aus dem Aufnahmeraum leicht entnommen werden kann.

Es ist weiterhin vorteilhaft, wenn das Überströmventil und der Gehäusedeckel aus gleichartigem Kunststoff gebildet sind. Hierdurch wird die Entsorgung und/oder die Wiederverarbeitung des Werkstoffs der genannten Bauteile erheblich erleichtert. Außerdem ist gewährleistet, dass sich die Bauteile bei Verwendung von gleichartigem Kunststoff miteinander verschweißen lassen können.

Eine weitere vorteilhafte Ausführungsform der Erfindung sieht vor, dass das Filtergewebe des Filterelements aus einem Vlies aus Kunststoff gebildet ist. Hierdurch kann eine besonders gute Filterwirkung erzielt werden, wobei gleichzeitig längere Standzeiten möglich sind, so dass die Wartungsintervalle für den Austausch des Filterelements gegenüber herkömmlichen Filterelementen aus Papiermaterial verlängert werden können.

Weitere vorteilhafte Ausgestaltungen und Einzelheiten der Erfindung sind der folgenden Beschreibung zu entnehmen, in der die Erfindung anhand der in der Zeichnung dargestellten Ausführungsbeispiele näher beschrieben und erläutert ist.

Es zeigen:
- Figur 1: eine erfindungsgemäße Ölfilteranordnung; und
- Figur 2: eine ausschnittsweise Darstellung eines Gehäusedeckels und einer Endseite eines Filterelements im geöffneten Zustand.

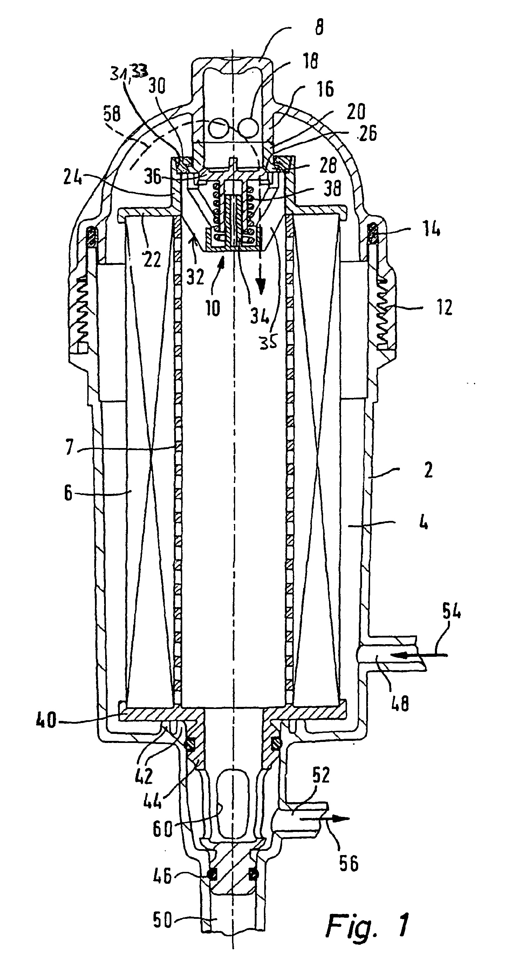

In Figur 1 ist eine Ölfilteranordnung mit einem insgesamt topfförmigen Gehäuse 2 dargestellt, wobei das Gehäuse 2 einen Aufnahmeraum 4 umgibt. In diesem Aufnahmeraum 4 ist ein zylindrisches Filterelement 6 aufgenommen, das eine der dem Gehäusedeckel zugewandte Endseite 22 umfasst. Das Filterelement 6 ist durch eine zentral angeordnete Stützstruktur 7 gegen ein Kollabieren geschützt.

Der Aufnahmeraum 4 ist durch einen Gehäusedeckel 8 verschlossen. An dem Gehäusedeckel 8 ist ein insgesamt mit dem Bezugszeichen 10 bezeichnetes Überströmventil angeordnet.

Der Gehäusedeckel 8 ist mittels eines Gewindes 12 an dem Gehäuse 2 befestigt. Dabei sind das Gehäuse 2 und der Gehäusedeckel 8 über eine Axialdichtung 14 gegeneinander abgedichtet.

Der Gehäusedeckel 8 weist auf seiner dem Filterelement 6 zugewandten Seite einen zylindrischen Fortsatz 16 auf. Dieser ist mit Durchbrüchen 18 versehen, die Durchströmöffnungen für Öl bilden.

Der zylindrische Fortsatz 16 ist an seiner Stirnseite mit einem Ringkragen 20 verbunden. Dieser weist an seiner dem Filterelement 6 zugewandten Stirnseite radial innen einen Ventilsitz 26 für das Überströmventil 10 auf. Radial außen weist die dem Filterelement 6 zugewandte Stirnseite des Ringkragens 20 einen Randabschnitt 28 auf. Der Randabschnitt 28 stützt einen umlaufenden Ringabschnitt 30 der Ventilkörperaufnahme 32, bzw. ist fest mit dem Ringabschnitt 30 verbunden, beispielsweise durch Verschweißen. Der Ringabschnitt 30 bildet einen radial äußeren Bereich 31 der Ventilkörperaufnahme 32 und weist ein sich zum Filterelement 6 hin verjüngendes Profil auf.

Das Überströmventil 10 greift in eine an der Endseite 22 des Filterelements 6 vorhandene Öffnung 25 ein. Die Endseite 22 ist ansonsten geschlossen ausgebildet. Die Öffnung 25 sieht eine entsprechend dem radialen Bereich 31 ausgebildete konusartige Verjüngung 33 auf, die von einer Ringwand 24 der Endseite 22 des Filterelements 6 gebildet wird.

Es kann vorgesehen sein, dass zwischen dem radial äußere Bereich 31 und der von der Ringwand 24 gebildeten Verjüngung 33 ein nicht dargestelltes, zusätzliches gummielastisches Dichtelement, beispielsweise in Form eines Dichtringes oder einer Dichtscheibe, vorgesehen ist.

Die Ventilkörperaufnahme 32 des Überstromventils 10 umfasst den Ringsabschnitt 30 mit dem radial äußeren Bereich 31, einen zentrisch angeordneten Führungsdorn 34 und einen zwischen dem Führungsdorn 34 und dem Ringabschnitt 30 angeordneten, öldurchströmbaren Käfigabschnitt 35. Auf dem Führungsdorn 34 ist ein Ventilkörper 36 verschiebbar gelagert. Zwischen der Ventilkörperaufnahme 32 und der dem Ventilsitz 26 abgewandten Seite des Ventilkörpers 36 ist eine Ventilfeder 38 vorgesehen, die sich an der Ventilkörperaufnahme 32 abstützt und den Ventilkörper 36 gegen den Ventilsitz 26 drückt.

Am unteren Ende des Filterelements 6 der in Figur 1 dargestellten Ölfilteranordnung ist eine untere Endseite 40 vorgesehen. Diese stützt sich auf Anschlägen 42 ab, die im Boden des Gehäuses 2 ausgebildet sind und dem Filterelement 6 zugewandt sind. Dabei kann vorgesehen sein, dass ein nichtdargestelltes Federelement sich am Boden des Gehäuses 2 abstützt und durch Beaufschlagen der unteren Endseite 40 das Filterelement 2 in Richtung Gehäusedeckel 8 beaufschlagt, wodurch eine Vorspannung auf die an dem radial äußeren Bereich 31 anliegende Verjüngung 33 zur besseren Dichtwirkung aufgebracht wird.

An der unteren Endseite 40 ist ein Hohlzapfen 44 vorgesehen, der über zwei O-Ringe 46 gegenüber dem Gehäuse 2 abgedichtet ist. Der Hohlzapfen 44 weist Durchströmöffnungen 60 auf.

Seitlich benachbart zum Hohlzapfen 44 ist im Gehäuse 2 der Ölfilteranordnung ein Kanal 52 für den Abfluss von gefiltertem Öl vorgesehen. Das Gehäuse 2 weist ferner an seinem unteren Ende, koaxial zum Hohlzapfen 44, eine Drainageöffnung 50 auf.

Im Bereich des unteren Endes des Aufnahmeraums 4 ist ein radial nach außen gerichteter Kanal 48 vorgesehen, durch den ungefiltertes Rohöl in den Aufnahmeraum 4 der Ölfilteranordnung gelangen kann.

Im Normalbetrieb wird die in Figur 1 dargestellte Ölfilteranordnung durch den Zuflusskanal 48 in mit 54 bezeichneter Richtung angeströmt. Das zu filternde Rohöl gelangt durch das Gewebe des Filterelements 6 in das Innere des Filterelements 6 und zum Hohlzapfen 6. Von dort gelangt das gefilterte Öl durch die Durchströmöffnungen 60 in den Kanal 52, wo es in mit 56 bezeichneter Richtung abfließen kann.

Sollte das Filterelement 6 verstopft sein, beispielsweise weil das Wartungsintervall überschritten wurde, kann ungefiltertes Rohöl in mit 58 bezeichneter Richtung unter Zwischenschaltung des Überströmventils 10 aus dem Aufnahmeraum 4 in den Innenraum des Filterelements 6 gelangen und von dort durch die Durchströmöffnungen 60 in den Kanal 52, wo es in mit 56 bezeichneter Richtung abfließen kann.

Zur Wartung und/oder Kontrolle des Überströmventils 10 ist es lediglich erforderlich, dass der Gehäusedeckel 8 vom Gehäuse 2 abgeschraubt wird. Dadurch wird das Überströmventil 10 zusammen mit dem Gehäusedeckel 8 aus dem Gehäuse 2 der Ölfilteranordnung entfernt. Somit ist das Überströmventil 10 mit seinen wesentlichen Bestandteilen (Ventilsitz 26, Ventilkörperaufnahme 32, Ventilkörper 36, Ventilfeder 38) direkt zugänglich, ohne dass weitere Demontagevorgänge erforderlich sind.

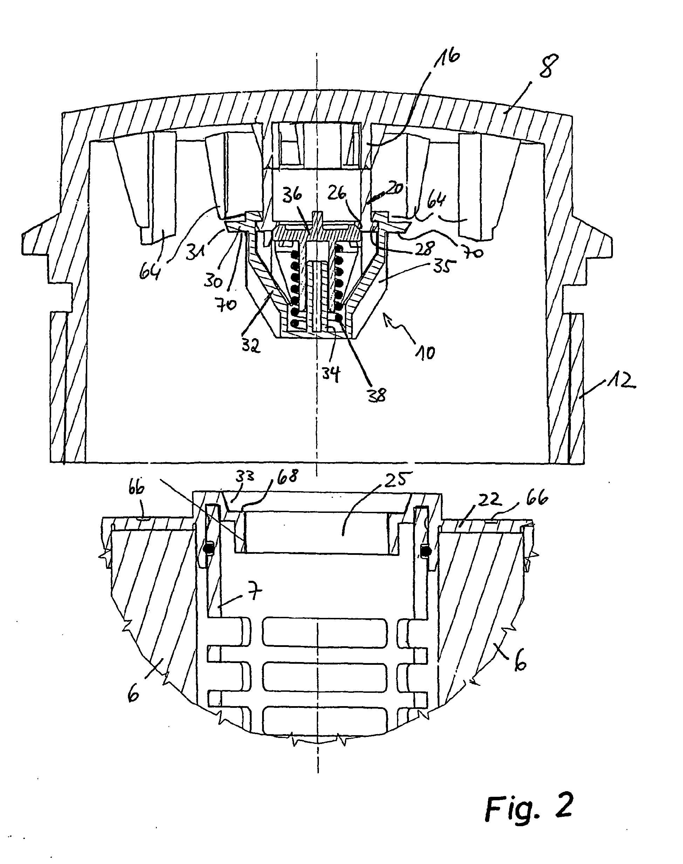

Der Ausschnitt gemäß Figur 2 zeigt einen abgeschraubten Gehäusedeckel 8 samt Überstromventil 10 sowie das freie Ende des Filterelements 6 mit der Endseite 22. Der Gehäusedeckel 8 und das Filterelement 6 gemäß Figur 2 sind geringfügig anders ausgebildet, als der Gehäusedeckel 8 und das Filterelement 6 gemäß Figur 1; entsprechende Teile tragen allerdings entsprechende Bezugszeichen.

Der Gehäusedeckel 8 gemäß Figur 2 weist auf seiner dem Filterelement 6 zugewandten Seite Gehäusedeckelstege 64 auf, zwischen denen ein Durchströmen von Öl möglich ist. Die Gehäusestege 64 sind dazu vorgesehen, mit der ihnen zugewandten Seite der Endseite 22 des Filterelements 16 zusammenzuwirken, und das Filterelement 6 in der vorgesehenen Stellung zu haltern. Die Endseite 22 sieht dazu eine umlaufende Ringnut 66 vor, in die die freien Enden der Gehäusedeckelstege 64 eingreifen können.

Das in der Figur 2 gezeigte Stützrohr 7 unterscheidet sich von dem Stützrohr 7 gemäß Figur 1 dadurch, dass es lösbar vom Filterelement 6 ausgebildet ist. Das Filterelement 6 gemäß Figur 2 kann beispielsweise in axialer Richtung bei abgenommenem Gehäusedeckel 8 vom Stützrohr 7 abgezogen werden.

Wie aus der Figur 2 deutlich wird, schließt sich nach radial innen an die Verjüngung 33 des Filterelements 6 eine senkrecht zur Längsachse verlaufende Ringfläche 68 an. Ebenso schließt sich an den radial äußeren Bereich 31 des Ventils 10 eine dem Filterelement 6 zugewandte, vom Ringabschnitt 30 gebildete, Ringfläche 70 an. Im montierten Zustand kann vorgesehen sein, dass die Ringfläche 68 an der Ringfläche 70 dichtend zum Aufliegen kommt. Folglich wird eine Dichtheit zwischen dem Ventil 10 und der Öffnung 25 durch Anliegen des radial äußeren Bereichs 31 des Ventils 10 an der Verjüngung 33 und durch gegenseitiges Anliegen der beiden Ringflächen 68, 70 erreicht. Erfindungsgemäß ist denkbar, dass zwischen dem Ringabschnitt 30 und der Verjüngung 33 beziehungsweise der Ringfläche 68 ein zusätzliches Dichtelement vorgesehen ist. Das Dichtelement kann insbesondere eine Ringscheibe sein, die zwischen den beiden Ringflächen 68, 70 angeordnet ist.

Durch Vorsehen des konusförmig ausgebildeten, radial äußeren Bereichs 13 des Überstromventils und der Verjüngung 33 des Filterelements 6 wird vorteilhafterweise erreicht, dass beim Aufschrauben des Gehäusedeckels 6 eine Selbstzentrierung des Filterelements 6 innerhalb des Aufnahmeraums 4 gewährleistet wird. Außerdem findet eine gleichmäßige, und deshalb vorteilhaft dichtende Anlage des radial äußeren Bereichs 13 des Überstromventils 10 an der Verjüngung 33 der Endseite 22 des Filterelements 6 statt. Ferner wird ein Verkanten des Ringabschnitts 30 des Überstromventils 10 an der Öffnung 25 des Filterelements 6 ausgeschlossen, da die dem Filterelement 6 zugewandte freie Kante des Ringabschnitts 30 in die einen größeren Durchmesser aufweisende, ihr zugewandte Seite der Verjüngung 33 eintauchen kann.

## Patentansprüche

1. Ölfilteranordnung mit einem Gehäuse (2), das einen Aufnahmeraum (4) für ein in das Gehäuse (2) einsetzbares, radial mit Öl von einer Rohölseite zu einer Reinölseite durchströmbares Filterelement (6) aufweist, und mit einem den Aufnahmeraum (4) verschließenden Gehäusedeckel (8), wobei zur Umgehung des Filterelements (6) ein am Gehäusedeckel (8) angeordnetes Überströmventil (10) vorgesehen ist, wobei das Überströmventil (10) einen beweglichen Ventilkörper (36), eine den Ventilkörper (36) führende Ventilkörperaufnahme (32), einen mit dem Ventilkörper (36) zusammenwirkenden Ventilsitz (26) und eine den Ventilkörper (36) auf den Ventilsitz (26) drückende Ventilfeder (38) aufweist, **dadurch gekennzeichnet, dass** am Deckel ein ringförmiger Kragen (20) angeordnet ist der an seiner dem Filterelement (6) zugewandte Stirnseite radial innen den Ventilsitz (26) und radial außen einen von einem Ringabschnitt (30) der Ventilkörperaufnahme (32) umgriffenen Randabschnitt (28) aufweist, wobei der Ringabschnitt (30) der Ventilkörperaufnahme (32) einen sich konusartig verjüngenden, radial äußeren Bereich (31) zum Eingriff in eine entsprechend konusartig ausgebildete Verjüngung (33) an der Öffnung (25) einer Endseite (22) des Filterelements (6) aufweist.

2. Ölfilterordnung nach Anspruch 1, **dadurch gekennzeichnet, dass** der ringförmigen Kragen (20) unlösbar mit dem Gehäusedeckel (8) und unlösbar mit dem Ringsabschnitt (31) verbunden ist.

3. Ölfilteranordnung nach einem der Ansprüche 1 oder 2, **dadurch gekennzeichnet, dass** der Ventilsitz (26) im Gehäusedeckel (8) integriert ist.

4. Ölfilteranordnung nach einem der vorhergehenden Ansprüche, **dadurch gekennzeichnet, dass** durch Einschrauben des Gehäusedeckel (8) bei in dem Aufnahmeraum (4) eingesetztem Filterelement (6) das Überströmventil im radial äußere Bereich gegen das Filterelement (6) und das Filterelement (6) gegen das Gehäuse beaufschlagt wird.

5. Ölfilteranordnung nach Anspruch 4, **dadurch gekennzeichnet, dass** ein sich am Gehäuse abstützendes Federelement das Filterelement (6) in Richtung Gehäusedeckel (8) beaufschlagt.

6. Ölfilteranordnung nach einem der vorhergehenden Ansprüche, umfassend ein in den Aufnahmeraum (4) eingesetztes Filterelement (6) mit einer Öffnung (25) an einer seiner Endseiten (22), wobei die Öffnung (25) eine dem radialen Bereich (31) des Umströmventils (10) entsprechende, konusartig ausgebildete Verjüngung (33) aufweist.

7. Filterelement (6) für eine Ölfilteranordnung nach einem der vorhergehenden Ansprüche, mit einer Öffnung (25) an einer Endseite (22) des Filterelements (6), wobei die Öffnung (25) eine dem radialen Bereich (31) des Umströmventils (10) entsprechende, konusartig ausgebildete Verjüngung (33) aufweist.

## Claims

1. An oil filter arrangement, having a housing (2) which housing has a receiving chamber (4) for a filter element (6) which can be inserted into the housing (2) and through which oil can flow from a crude oil side to a clean oil side, and having a housing cap (8) which closes the receiving chamber (4), and for bypassing the filter element (6), an overflow valve (10) disposed on the housing cap (8) is provided, and the overflow valve (10) has a movable valve body (36), a valve body receptacle (32) that guides the valve body (36), a valve seat (26) that cooperates with the valve body (36), and a valve spring (38) that presses the valve body (36) against the valve seat (26), **characterized in that** disposed on the cap is an annular collar (20) which, on its face end toward the filter element (6), has the valve seat (26) radially inward and a peripheral portion (28) radially outward, the peripheral portion being embraced by an annular portion (30) of the valve body receptacle (32), and the annular portion (30) of the valve body receptacle (32) has a conically tapering radially outer region (31) for engagement with a correspondingly conically embodied tapered portion (33) at the opening (25) of a face end (22) of the filter element (6).

2. The oil filter arrangement as defined by claim 1, **characterized in that** the annular collar (20) is joined nondetachably to the housing cap (8) and nondetachably to the annular portion (31).

3. The oil filter arrangement as defined by one of claims 1 or 2, **characterized in that** the valve seat (26) is integrated with the housing cap (8).

4. The oil filter arrangement as defined by one of the foregoing claims, **characterized in that** once the filter element (6) has been inserted into the receiving chamber (4), screwing in the housing cap (8) urges the overflow valve in the radially outer region against the filter element (6) and urges the filter element (6) against the housing.

5. The oil filter arrangement as defined by claim 4, **characterized in that** a spring element braced on the housing urges the filter element (6) in the direction of the housing cap (8).

6. The oil filter arrangement as defined by one of the foregoing claims, including a filter element (6), inserted into the receiving chamber (4), with an opening (25) on one of its face ends (22), wherein the opening (25) has a conically embodied tapered portion (33) corresponding to the radial region (31) of the overflow valve (10).

7. A filter element (6) for an oil filter arrangement as defined by one of the foregoing claims, with an opening (25) on one of its face ends (22), wherein the opening (25) has a conically embodied tapered portion (33) corresponding to the radial region (31) of the overflow valve (10).

## Revendications

1. Dispositif de filtre à huile avec un boîtier (2), qui présente un espace de logement (4) pour un élément filtrant (6) pouvant être inséré dans le boîtier (2) et pouvant être traversé radialement avec de l'huile d'un côté huile brute vers un côté huile pure, et avec un couvercle de boîtier (8) pouvant fermer l'espace de logement (4), une soupape de trop-plein (10) disposée sur le couvercle de boîtier (8) étant prévue pour contourner l'élément filtrant (6), la soupape de trop-plein (10) présentant un corps de soupape (36) mobile, un logement de corps de soupape (32) guidant le corps de soupape (36), un siège de soupape (26) coopérant avec le corps de soupape (36) et un ressort de soupape (38) appuyant le corps de soupape (36) sur le siège de soupape (26),
**caractérisé en ce que** sur le couvercle est disposé un col (20) de forme annulaire qui présente sur son côté avant tourné vers l'élément filtrant (6) radialement à l'intérieur le siège de soupape (26) et radialement à l'extérieur une partie de bordure (28) entourée par une partie annulaire (30) du logement de corps de soupape (32), la partie annulaire (30) du logement de corps de soupape (32) présentant une zone (31) radialement extérieure et se rétrécissant à la façon d'un cône pour l'engagement dans un rétrécissement (33) conçu en forme de cône appropriée sur l'ouverture (25) d'un côté d'extrémité (22) de l'élément filtrant (6).

2. Dispositif de filtre à huile selon la revendication 1, **caractérisé en ce que** le col (20) de forme annulaire est réalisé de façon indétachable avec le couvercle de boîtier (8) et de façon indétachable avec la partie annulaire (31).

3. Dispositif de filtre à huile selon l'une quelconque des revendications 1 ou 2, **caractérisé en ce que** le siège de soupape (26) est intégré dans le couvercle de boîtier (8).

4. Dispositif de filtre à huile selon l'une quelconque des revendications précédentes, **caractérisé en ce que**, par le vissage du couvercle de boîtier (8) sur l'élément filtrant (6) inséré dans l'espace de logement (4), la soupape de trop-plein est sollicitée dans la zone radialement extérieure vers l'élément filtrant (6) et l'élément filtrant (6) vers le boîtier.

5. Dispositif de filtre à huile selon la revendication 4, **caractérisé en ce qu'**un élément de ressort s'appuyant sur le boîtier sollicite l'élément filtrant (6) en direction du couvercle de boîtier (8).

6. Dispositif de filtre à huile selon l'une quelconque des revendications précédentes, comprenant un élément filtrant (6) inséré dans l'espace de logement (4) avec une ouverture (25) sur l'un de ses côtés d'extrémité (22), l'ouverture (25) présentant un rétrécissement (33) correspondant à la zone (31) radiale de la soupape de trop-plein (10) et réalisé en forme de cône.

7. Elément filtrant (6) pour un dispositif de filtre à huile selon l'une quelconque des revendications précédentes avec une ouverture (25) sur un côté d'extrémité (22) de l'élément filtrant (6), l'ouverture (25) présentant un rétrécissement (33) correspondant à la zone (31) radiale de la soupape de trop-plein (10) et réalisé en forme de cône.
